# EUROPEAN PATENT SPECIFICATION

(11) **EP 0 490 854 B1**
(45) Date of publication and mention of the grant of the patent: **25.09.1996**
(21) Application number: 91850306.1
(22) Date of filing: 06.12.1991
(51) Int. Cl.: C08L 23/06, C08J 3/24, C08J 3/28

(54) **Process and equipment for continuous crosslinking of polymeric materials and useful photo-initiators for the reaction**
Verfahren und Vorrichtung zum kontinuierlichen Vernetzen von Polymerwerkstoffen und für diese Reaktion geeignete Photo-Initiatoren
Procédé et installation pour la réticulation en continu de matériaux polymères et photo-initiateurs utiles pour cette réaction

(30) Priority: 07.12.1990 SE 9003919
(43) Date of publication of application: 17.06.1992
(73) Proprietor: INSTITUTET POLYMERUTVECKLING AB, S-182 51 Djursholm (SE)
(72) Inventor: Ranby, Bengt, S-182 62 Djursholm (SE)
(74) Representative: Stolt, Lars C.

(56) References cited:
- EP-A- 0 330 705
- JOURNAL OF POLYMER SCIENCE, POLYMER CHEMISTRY vol. 27, 1989, NEW YORK, US. pages 4051 - 4075; CHEN, Y.L. & RANBY,B.: 'Photocrosslinking of polyethylene. I. Photoinitiators, crosslinking agent, and reaction kinetics'
- WORLD PATENTS INDEX Week 7826, Derwent Publications Ltd., London, GB; AN 78-46719A & JP-A-53 056 241
- WORLD PATENTS INDEX Week 7826, Derwent Publications Ltd., London, GB; AN 78-46722A & JP-A-53 056 244
- WORLD PATENTS INDEX Week 8028, Derwent Publications Ltd., London, GB; AN 80-49003C & JP-A-55 071 724

## Description

### Field of the invention

The present invention relates to a continuous process and irradiation equipment for crosslinking of polymeric materials (PM), in particular polyethylene (PE), based on photo-initiated crosslinking using UV-light. The process is rapid and takes place using a new type of photo-initiator.

### Background of the invention

So far, the industrial manufacturing of crosslinked polymeric materials has been made through high energy irradiation, e g γ-irradiation and accelerated electron beams, or using chemical crosslinkers such as peroxides and silanes. These methods are expensive or slow and therefore of limited use. However, during the last few years attempts have been made to find technical methods to crosslink PM using photo-initiators and UV-light. Recently, the inventor and his collaborators have shown that polyethylene of high density (HDPE), in a simple and fast batch process, can be crosslinked to a high gel content using UV-light in the presence of UV-initiators; cf Chen Y L and Rånby B, J Polym Sci, Polym Chem, Ed 27, p 4051-4075 (1989). They have also shown that nitrogene atmosphere during the crosslinking step has a favourable effect on side reactions and gel content obtained, and that the crosslinking can take place in the presence of stabilizers, such as antioxidants and peroxide decomposers. The stabilizers can be added to the melt before the crosslinking to increase the stability towards thermal, photochemical and oxidative degradation of the manufactured products. Generally speaking, crosslinked materials have lower stability than the corresponding un-crosslinked material. (Cf Winslow F H et al, Chem Ind (London), 5 53 (1953).) The possibility to stabilize crosslinked materials, in particular PE, is very important since it is required that the products can be used at elevated temperatures and also in sunlight. By making the photo-crosslinking in the presence of both photo initiators and stabilizers a crosslinked and stabilized polyethylene product is obtained which is as stable as the un-crosslinked polyethylene. In earlier works the inventor and his collaborators have shown that the addition of stabilizers can be made without affecting the speed of the crosslinking reaction and the gel content of the product, cf Chen Y L and Rånby B, J Polym Chem, Ed 28, p 1847-1859 (1990).

The work mentioned above, which is the background of the present invention and from which further information conceming photo-crosslinking of PE and stabilization of crosslinked PE can be gathered, is all related to the batchwise procedures. To make an industrial production of XLPE interesting, a fast and continuous process is required, which directly can be inserted into a continuous production process, e g "on line" after the extrusion of the polyethylene.

### Description of the invention

Through the present invention a continuous process for fast crosslinking of polymeric materials, in particular polyethylene, is obtained based on photo-initiated crosslinking in a polymer melt in the presence of crosslinker and a new kind of photo-initiator. The reaction is very fast and without problems can be part of a production step in a continuous production of crosslinked polyethylene (XLPE), where the polyethylene granules after mixing with adequate amounts of additives such as crosslinkers, photo-initiator and, if necessary, stabilizers, is extruded and after extrusion is passed through an irradiation unit containing UV-lamps.

The invention also includes such a new irradition unit for continuous photo-crosslinking using UV-light.

In the earlier described batchwise processes, crosslinking reaction with 18 different photo-initiators were examined (cf Tables II and III, J Polym Sci Polym Chem, Ed 27, p 4053-54 and 4056), and different benzophenone derivatives and especially 4-chloro-benzophenone were found to be very efficient photo-initiators.

During the first experiments to adjust and insert the earlier known batchwise crosslinking reaction into a continuous method, problems occurred because the polymer compound, which contains photo-initiator and crosslinker when coming out of the extruder can be of temperatures as high as 200°C. If benzophenone or any of its earlier known derivatives are used as photo-initiator in the polymer melt it will be evaporated due to its high vapor pressure at the process temperature and cause problems. The evaporation will cause loss of initiator as well as an annoying smell in the environment. Furthermore, there will be a stop in production due to condensation and carbonization of the vapor from the plastic material on the inner side of the indication unit with a resulting blackening of the quartz tube. The irradiation unit must therefore be dismounted regularly and cleaned or even replaced, which is lengthy and will give low productivity.

Therefore, one object of the present invention was to devise a continuous process for photo-crosslinking polyethylene which would not be affected by the above drawbacks and this was achieved thanks to the use of photo-initiators with low vapor pressure at the process temperature and high solubility in polyethylene, i e they shall hardly evaporate at the extruder temperature and are compatible with polyethylene.

New benzophenone derivatives with high molecular weight and low vapor pressure were prepared using an acid with a long carbon chain which was reacted with benzophenone in the presence of pyridine according to the following reaction scheme: 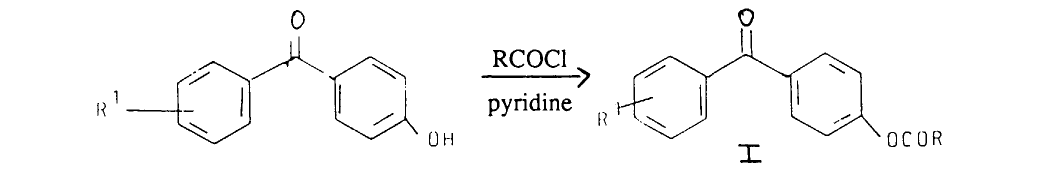 where R represents a carbon chain containing 10 to 50 carbon atoms, preferably 10 to 25 carbon atoms, and R¹ represents a hydrogen or a halogene, such as chlorine. R¹ is mainly substituted at the 4-position of the ring.

Also other known photo-initiators containing an hydroxy group, which can be easily reacted with an acid chloride and in the same way as benzophenone can increase its molecular weight by formation of a derivative with a long side chain, should be useful for the invention, such as derivatives of 1-hydroxy-cyclohexylphenyl-ketone.

Acid chlorides, which are particularly suitable to react with 4-hydroxyl-benzophenone, are acid chlorides of easily available acids, such as stearic acid and lauric acid. To get a fast reaction, 4-C1-4'-hydroxy-benzophenone is preferably used.

The photo-initiator is added to a concentration of 0.5 to 3 wt-%, preferably 1-2 wt-%. The new photo-initiators are very efficient. A reasonable explanation is that their solubility in polyethylene is higher due to the long C-chain which improves the compatibility of the benzophenone in the polymer matrix. Consequently, without increase of the percentage addition of initiator, a gel content comparable with the batchwise process is achieved although, due to a long side chain, the molecular weight of the initiator has been increased compared to the molecular weight of the benzophenone.

A suitable crosslinker for polyethylene is triallyl-cyanurate (TAC), but other known crosslinkers can be used. The crosslinker is added to the polymer melt to a concentration of about 0.5 to 3 wt-%, preferably about 1.0 wt-%. If polyfunctional allyl compounds of higher molecular weight than TAC are required these can be produced. Until now TAC has not caused any problems but has been suitable for the process of the invention.

To lower pre-oxidation of the polymer melt under the crosslinking action also to increase the stability of the manufactured crosslinked products, small amount of photo-stabilizers of the type hindered amine, e g Tinuvin 770, can be added to the melt. Also other stabilizers of the type hindered phenols and anti-oxidants can be added to increase the stability towards heat ageing of the products. Stabilizer and/or anti-oxidant is added in the amount of 0.02 to 0.2 wt-%, preferably 0.05 to 0.1 wt-%. The atmosphere surrounding the polymer melt also has effect on the gel content and the tendency of ageing of the product. The irradiation with UV-light is preferably done at a temperature within the melting range of the polymer, i.e. at about 100-140°C for LDPE and about 130-170°C for HDPE, respectively, to obtain a high reaction rate and high gel content. The irradiation is preferably carried out under N₂-atmosphere.

The crosslinking step is preferably carried out in a special irradiation unit containing a cover formed as a double-walled cylinder, a quartz tube inside the cover, at least one UV-lamp, a reflector and possibly a conveyor belt. The device is cooled through a cooling medium that is circulated in the cover and strong air ventilation. The quartz tube makes it possible to variate the atmosphere during the crosslinking step and catches substances which can be released and evaporated from the polymer melt.

The invention will now be closer described by means of examples and with reference to the accompanying drawings.

Fig. 1 shows schematically a continuous process for production of crosslinked polymeric material in the form of an extruded band.

Fig. 2 is a schematical longitudinal view of an irradiation unit according to the invention, and

Figs. 3-6 show diagrams of the gel content and ageing properties of the products.

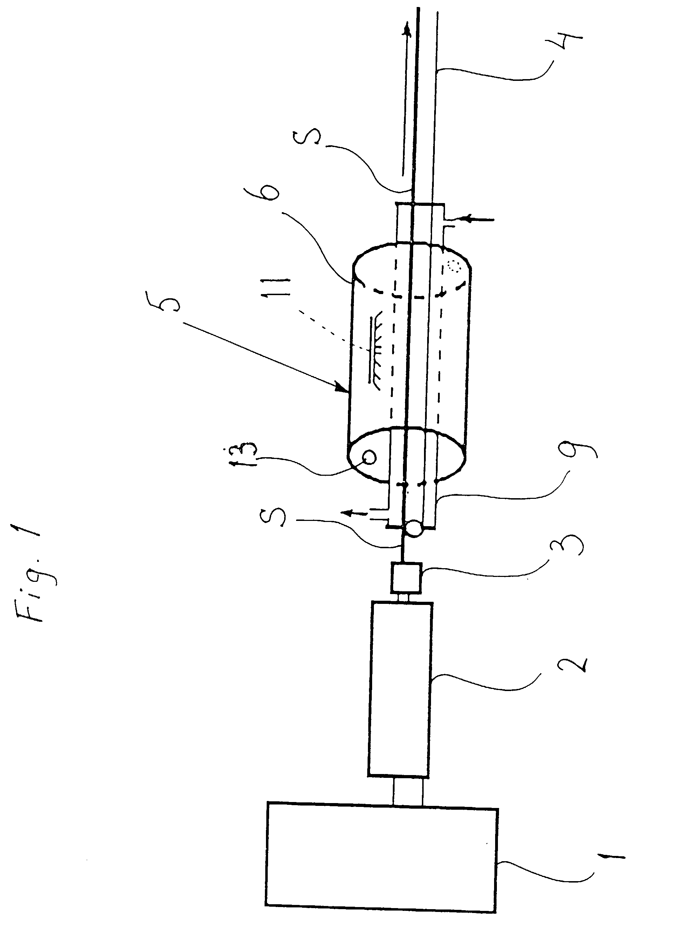

In the continuous process in Fig. 1, polymer granules are mixed with crosslinking agent, a photo-initiator of formula I and suitable additives in a mixer 1. Then the compound is fed and melted in an extruder 2. The mixer 1 and the extruder 2 are preferably in a common unit, e g a double screw extruder. The melted material is extruded through a gauge 3, e g to a band of melted material, and is received onto a conveyor band 4 which is led through the irradiation unit. The time of irradiation can be varied by varying the speed of the extruder and/or the velocity of the conveyor band (the conveyor band is driven by a motor which is not shown in the Figure).

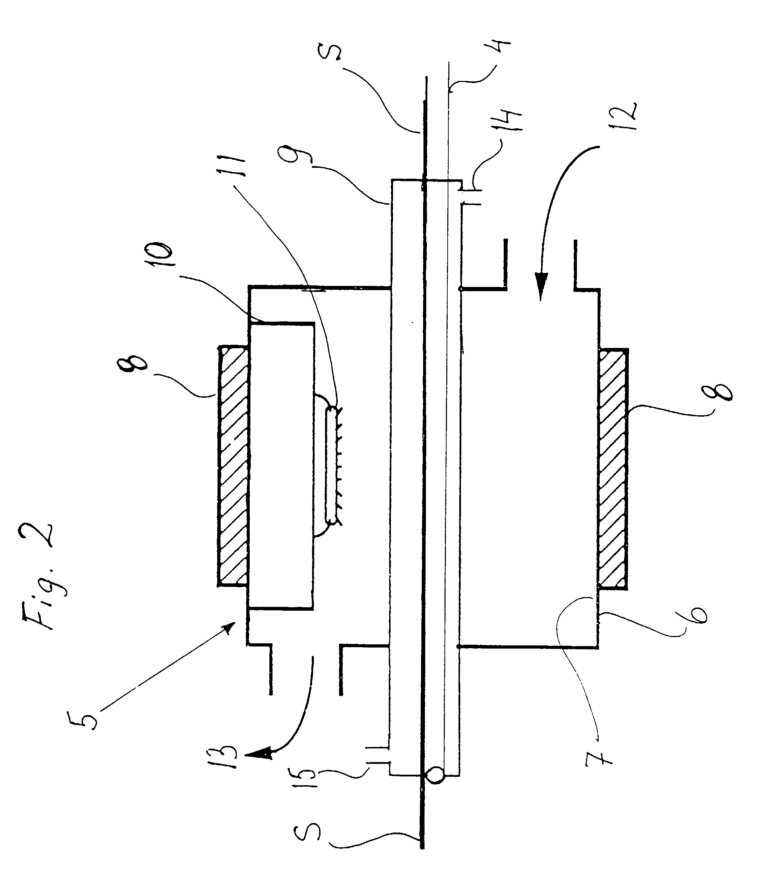

The irradiation unit 5 is shown in detail in Fig. 2. It contains a cover in the shape of a double walled cylinder 6, the inner walls of which are covered with a reflecting, to high gloss polished material 7, e g high polished aluminium foil. Through the jacket of the cylinder 8 a cooling medium, e g water, is circulated. In the cylinder 6, in central position, a quartz tube 9 is placed and between this tube and the inside of the cylinder one or more radially and possibly axially movable lamp sockets 10 with UV-lamps 11 are placed. To cool the lamps air is sucked in at 12 and drawn out at 13 using a fan (not shown in the Figure). The quartz tube 9 is equipped with nozzles 14, 15 to make it possible to circulate e g N₂, which will remove air and give an N₂-atmosphere in the quartz tube.

Suitable UV-lamps for the irradiation unit are e g Philips HPM 15, high pressure mercury lamps working at 2 kW. The heat produced by the lamps requires good cooling which is achieved by the described water cooling and strong air circulation. The distance between the lamp(s) and the material which is taken through the quartz tube and which is to be crosslinked, can be varied by making the lamp sockets movable radially and possibly axially.

The crosslinking velocity, i e the gel formation rate is proportional to the square of the irradiation intensity. UV-light refers to irradiation within the range 200-500 nm.

The distance between the UV-lamp(s) and the polymeric material which is to be crosslinked can be varied between 5 and 15 cm. To irradiate the whole periphery of the material more than one UV-lamp can be mounted in the cylinder, e.g. three lamps at a distance of 120°.

Alternatively the continuous process shown in Fig. 1 can be used to cover a metal wire with an insulating coating of crosslinked polymeric material for the production of electric cable. In this process a cross-head for the self-bearing wire which shall be covered by the polymeric material is inserted directly after the die of the extruder. In this application no conveyor is needed, but the self-bearing coated wire is directly pulled through the irradiation unit. Another alternative use for the continuous process is to extrude and crosslink a tube, suitable for production of e g hot water pipes.

### Production of photo-initiators

The production of the new photo-initiators was made using the synthesis described by N Rabjohn (ed), Organic Synthesis (Collective Vol IV) John Wiley & Sons, New York, 1963)p 478 ff. The synthesis of 4-hydroxylbenzophenone laurate is used as an example (BP-L).

### Example 1: Synthesis of BP-L

In a 100 ml conical flask, equipped with a drying tube containing CaCl₂, 20.0 g (0.099 mol) 4-hydroxylbenzophenone and 20 ml anhydrous pyridine are mixed. During 10 minutes 24 ml (0.101 mol) lauric acid chloride is added dropwise. The temperature of the reaction mixture increases spontaneously and some yellow precipitate will form. When the heat evolution has stopped, the mixture is poured with good stirring into 600 ml 3% HCl containing 200 g crushed ice.

The product is filtered into a Büchner funnel and cleaned first with 20 ml H₂O and then with 20 ml MeOH. The product is collected and dried in air at room temperature. It is recrystalized from 180 ml MeOH and hydroxylbenzophenone laurate (BP-L) is received as a white powder; yield 35.4 - 37.9 h (94-98% of theoretical yield); melting point 47.5-49.5°C.

### Examples 2-4

Using 4-hydroxylbenzophenone and stearic acid chloride 4-hydroxybenzophenone stearate is produced as in example 1. In table 1 the 4-chloro substituted benzophenone derivatives produced as in example 1 are listed.

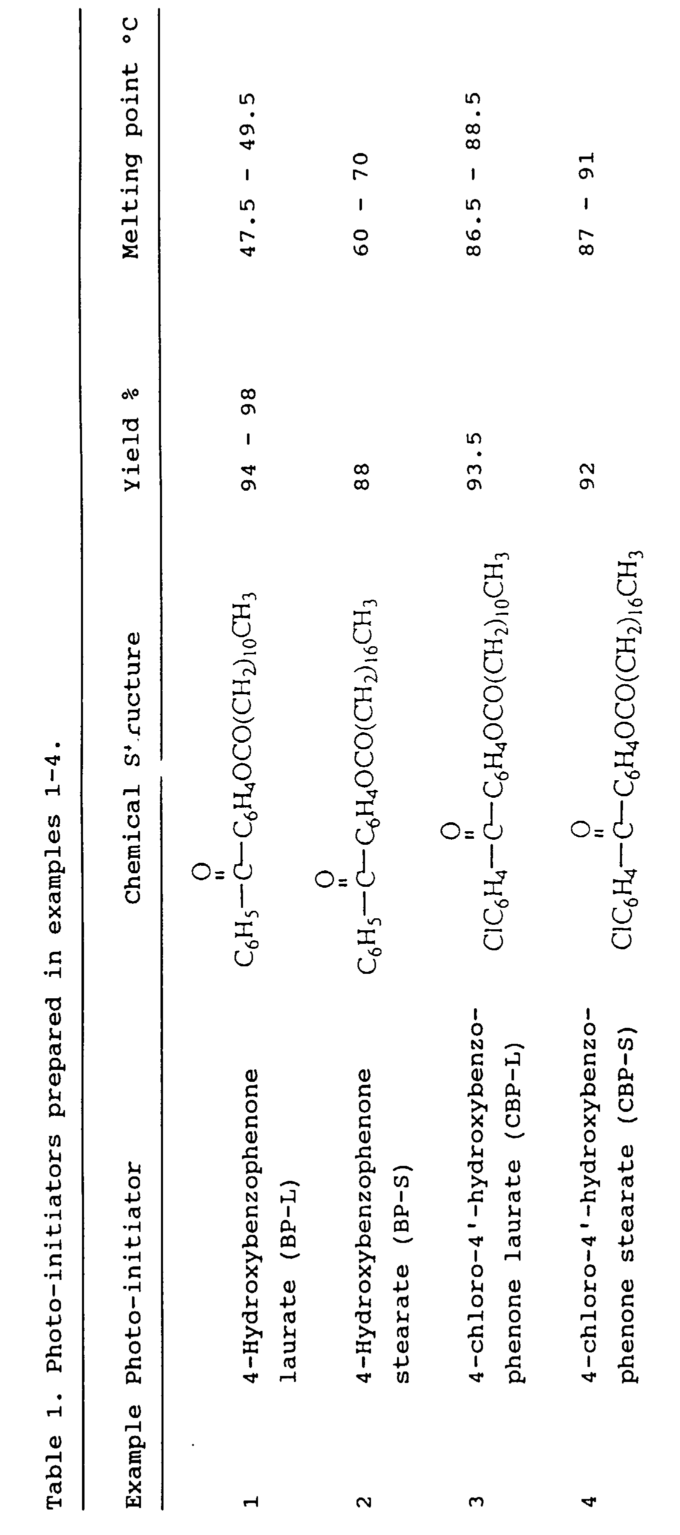

In the following examples the new photo initiators are used to produce crosslinked PE according to the invention. The invention must not be limited to the crosslinking of PE but is also possible to use for crosslinking of other polymers using UV-light at temperatures in the melting range of the respective polymer, where molecular motions take place in the polymer and there are no or almost no crystals in the polymer melt.

### Production of crosslinked polyethylene

### Example 5

Granules of LDPE NCPE 6600 from Neste Polyeten AB, are mixed at about 110°C with 1.0 wt-% 4-hydroxylbenzophenone laurate (prepared in example 1), 1.0 wt-% triallylcyanurate (TAC), and 0.05 wt-% stabilizer in a BRABENDER PLASTI-CORDER® (a double-screw extruder which both mixes and extrudes the plastic material). The melted material is extruded through the die 3 (cf Fig. 1) at a temperature of about 150-200°C to a continuous band and is caught onto a conveyor 4 made of glass fibre reinforced Teflon®. The conveyor 4 is taken through the quartz tube 9 in the center of the irradiation unit 5. The LDPE material has a temperature of about 135°C during the passage through the irradiation unit. The irradiation unit which is used has the dimensions: length of cylinder 400 mm, diameter 400 mm; diameter of quartz tube 50 mm.

The irradiation time can be varied by varying the speed of the conveyor band (V₁) and by varying the extrusion speed (V₂). The band is stretched if V₁ is greater than V₂.

Table 2 gives the conditions for production and the results for crosslinked LD polyethylene bands.

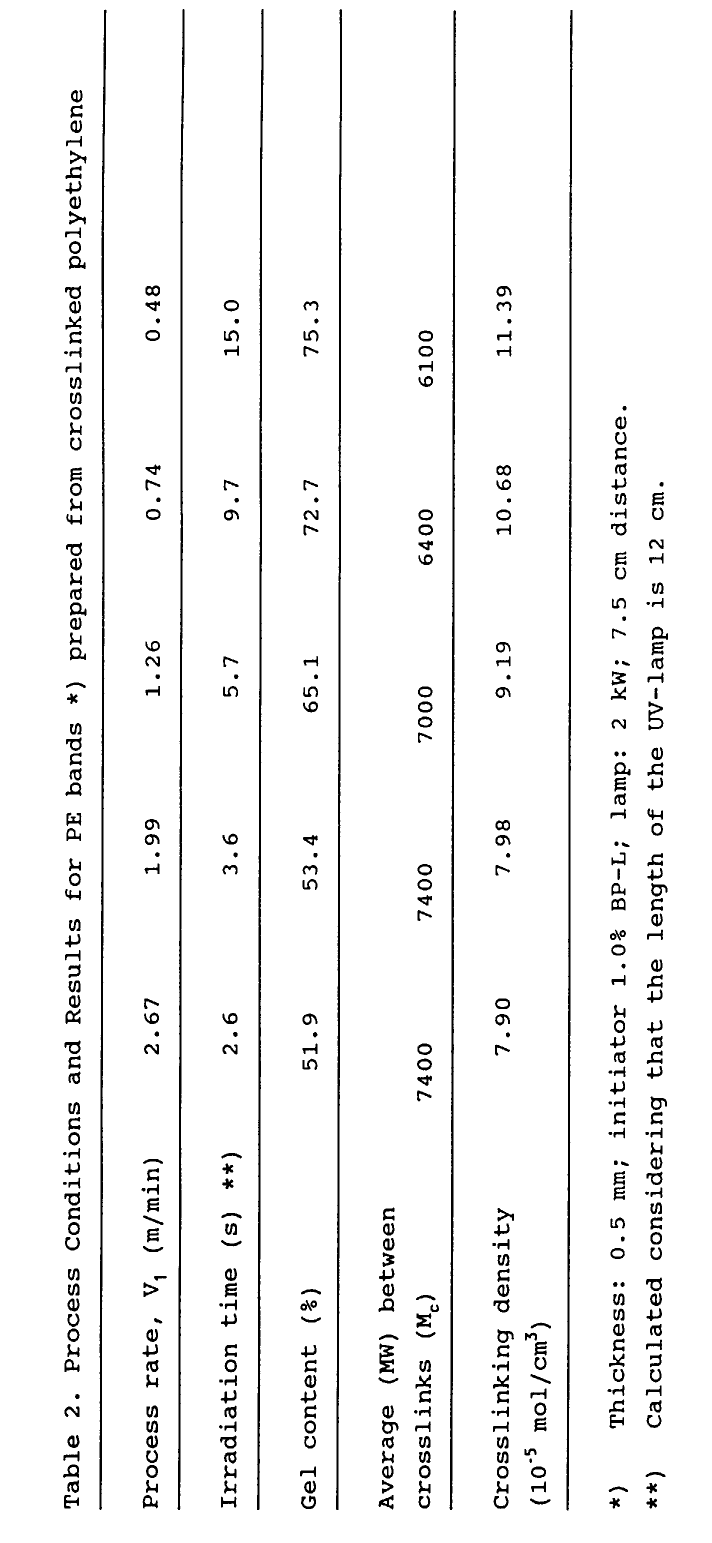

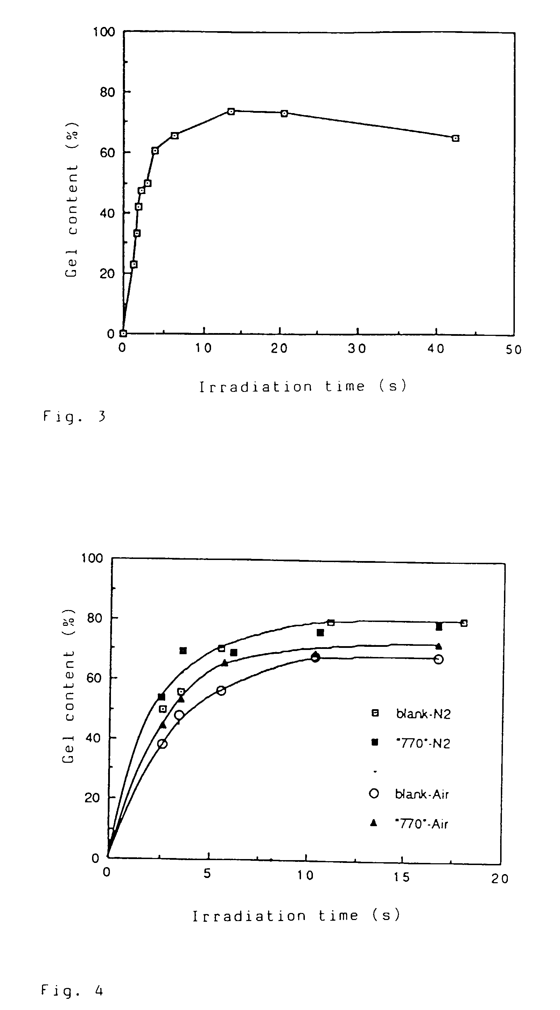

The results show that a gel content > 70% is achieved already at an irradiation time between 5 and 10 s, which corresponds to a transport velocity of 1.2 to 0.7 m/min through the irradiation. Already after about 3-4 s of irradiation a gel content of > 50% is achieved, which is sufficient for many applications. Cf also Fig. 3 which shows the gel content as a function of irradiation time when the invention is used.

### Presence of photo-stabilizers and effects of the inner atmosphere on the photo-crosslinking reaction, respectively

### Example 6

X-linked LDPE was manufactured according to example 5 under N₂-atmosphere and 02-atmosphere, and in the presence of and without 0.05 wt-% Tinuvin 770®, respectively. The achieved gel contents are shown in Fig. 4. Addition of the photo-stabilizer Tinuvin 770® reduces the pre-oxidation and thereby the gel forming velocity is increased during the initial phase. However, the curves show that the inner atmosphere (N₂ and air, respectively), has a greater influence on the crosslinking reaction, i e the favourable effect of N₂-atmosphere.

### Mechanical properties and influence by different stabilizers:

### Example 7

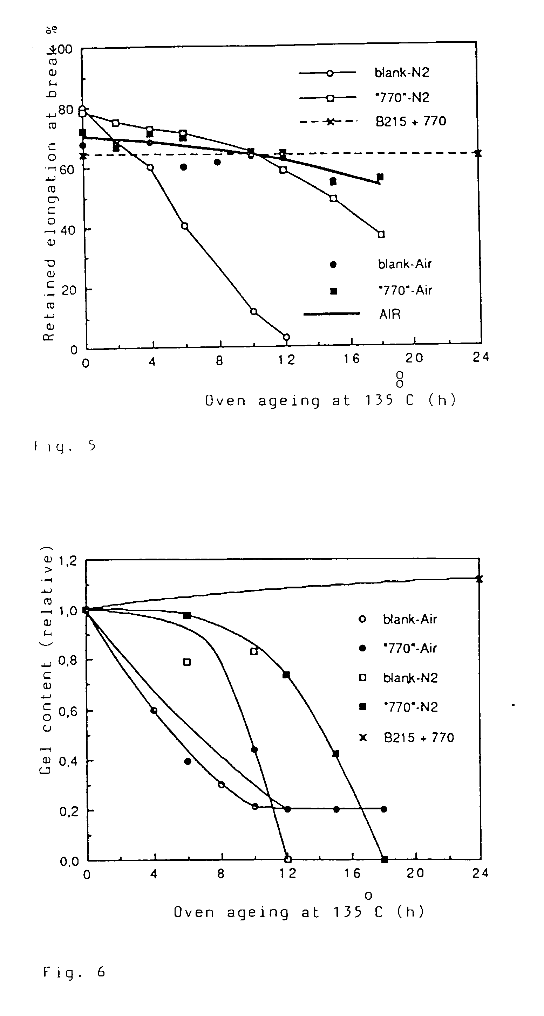

X-linked LDPE was produced in the presence of 0.05 wt-% Tinuvin 770®, Irganox B215® (a mixture of 1 part hindered phenol Irganox 1076® and two parts organic phosphite Irgafos 168®) as well as a combination of said stabilizer and the antioxidant. Fig. 5 shows the results of remaining elongation at break after ageing in oven at a temperature of 135°C. The measurements were made on an Instron 1121®. From the curves it can be seen that the stabilizer Tinuvin 770® and the combination stabilizer/antioxidant have a positive effect on the heat stability of the product, the latter combination being very efficient. Fig. 6 shows measured remaining gel content after ageing in oven at 135°C. The curves show the same tendency as the curves in Fig. 5, i e the combination of stabilizer and antioxidant gives an efficient stabilization towards degradation of the polymer.

## Claims

1. A process for the preparation of crosslinked polyethylene (crosslinked ethylene plastics) by irradiation with ultraviolet light of a shaped compound containing polyethylene mixed with a crosslinking agent and a photo-initiator, **characterized in that** the photo-initiator is a chemical substance of the formula 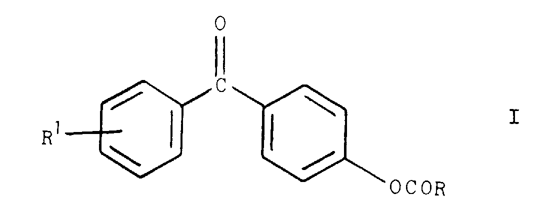 wherein R is a hydrocarbon group with 10-50 carbon atoms, preferably 10-25 carbon atoms, and R¹ is hydrogen or halogen, like chlorine, preferably in 4-position and that the polymer compound is extruded in suitable form, whereupon the still hot, not solidifed polymer melt directly after the extrusion ("on line") is crosslinked to a high gel content >50% by ultraviolet irradiation.

2. A process according to claim 1, **characterized in** that said crosslinking reaction is carried out at a temperature within the melting range of said polymer and in nitrogen atmosphere.

3. A process according to any of claims 1-2, **characterized in** that said crosslinking reaction is carried out in the presence of further compounding material as at least one photo-stabilizer and/or at least one antioxidant.

4. A process according to any of claims 1-3, **characterized in** that said crosslinking reaction is carried out in a polymer melt enclosing a self-supporting metal wire.

5. A process according to claim 1, **characterized in** that said photo-initiator is a substance with the formula I in which COR is a lauroyl or stearoyl group.

6. An irradiation unit for the preparation of crosslinked polymeric materials by irradiation with ultraviolet light of a shaped compound containing polymeric materials mixed with a crosslinking agent and a photo-initiator, **characterized in** that, to obtain a continuous process, the photo initiator is a chemical substance of the formula 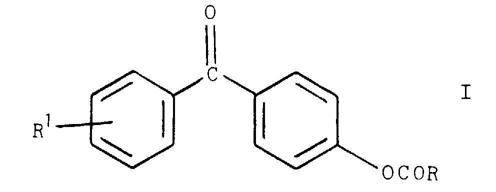 wherein R is a hydrocarbon group with 10-50 carbon atoms, preferably 10-25 carbon atoms, and R¹ is hydrogen or halogen, like chlorine, preferably in 4-position, and the unit includes a cover (6) and, inside said cover, a reflector (7), and at least one UV-lamp (11) and in order to maintain an optional atmosphere during the crosslinking reaction, a quartz tube (9) being placed inside the cover, through which tube the polymeric material (S) is running.

7. An irradiation unit according to claim 6, **characterized in** that the cover consists of a cylinder with double walls (6,8) and between said walls a cooling medium is circulated.

8. An irradiation unit according to claim 6 or 7, **characterized in** that the quartz tube (9) is provided with a conveyor belt (4) running through, which carries the polymeric material formed as a profile (S).

9. An irradiation unit according to claim 8, **characterized in** that the speed (V₁) of the conveyor belt (4) can be varied.

10. An irradiation unit according to any of claims 6-9, **characterized in** that the quartz tube (9) is provided with connections (14,15) for inlet and/or outlet of air or nitrogen.

11. An irradiation unit according to any of claims 6-10, **characterized in** that the UV-lamp (11) is connected to a lamp holder (10) which is mobile in the cover (6) both radially and axially.

## Patentansprüche

1. Verfahren zur Herstellung von vernetztem Polyäthylen (vernetzte Äthylenkunststoffe) durch Bestrahlung eines geformten Compounds mit ultraviolettem Licht, welches Compound Polyäthylen enthält, das mit einem vernetzenden Wirkstoff sowie einem Photo-Initiator vermischt ist, dadurch gekennzeichnet, daß der Photo-Initiator eine chemische Substanz mit der Formel 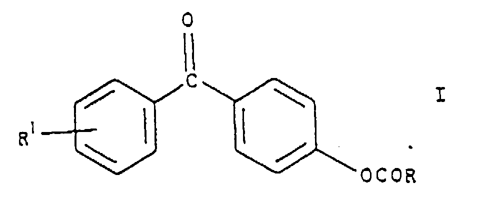 ist, in der R eine Kohlenwasserstoffgruppe mit 10 - 50 Kohlenstoffatomen, vorzugsweise 10 - 25 Kohlenstoffatomen, und R¹ ein Hydrogen oder Halogen, wie Chlor, vorzugsweise in 4-Position darstellt, und daß das Polymer-Compound in geeigneter Form extrudiert wird, worauf die noch heiße, nicht verfestigte Polymerschmelze direkt nach der Extrusion (,,on line") durch ultraviolette Bestrahlung zu einem hohen Gelgehalt > 50 % vernetzt wird.

2. Verfahren nach Patentanspruch 1, dadurch gekennzeichnet, daß die Vernetzungsreaktion bei einer Temperatur innerhalb des Schmelzbereiches des Polymers und unter Stickstoffatmosphäre durchgeführt wird.

3. Verfahren nach Patentanspruch 1 oder 2, dadurch gekennzeichnet, daß die Vernetzungsreaktion in Anwesenheit von weiterem compoundierendem Material, wie zumindest einem Photo-Stabilisator und/oder wenigstens einem Antioxydanten durchgeführt wird.

4. Verfahren nach einem der Patentansprüche 1 bis 3, dadurch gekennzeichnet, daß die Vernetzungsreaktion in einer Polymerschmelze durchgeführt wird die einen selbsttragenden Metalldraht umschließt.

5. Verfahren nach Patentanspruch 1, dadurch gekennzeichnet, daß der Photo-Initiator eine Substanz mit der Formel I ist, in welcher COR eine Lauroyl - oder Stearylgruppe ist.

6. Bestrahlungsvorrichtung für die Herstellung von vernetzten polymeren Materialien durch Bestrahlung eines geformten Compounds mit ultraviolettem Licht, welches Compound polymere Materialien enthält, die mit einem vernetzenden Wirkstoff sowie einem Photo-Initiator vermischt sind, dadurch gekennzeichnet, daß der Photo-Initiator zur Erzielung eines kontinuierlichen Prozesses eine chemische Substanz mit der Formel 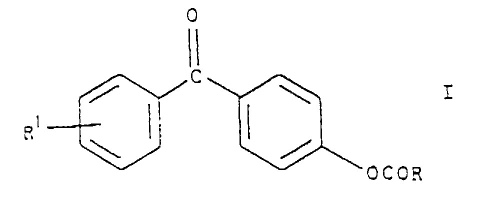 ist, in der R eine Kohlenwasserstoffgruppe mit 10 - 50 Kohlenstoffatomen, vorzugsweise 10 - 25 Kohlenstoffatomen, und R¹ ein Hydrogen oder Halogen, wie Chlor, vorzugsweise in 4-Position darstellt, und daß die Vorrichtung eine Abdeckung (6) und innerhalb dieser einen Reflektor (7) sowie wenigstens eine UV-Lampe (11) umfaßt und weiters zur Aufrechterhaltung einer wählbaren Atmosphäre während der Vernetzungsreaktion eine Quartzröhre (9) aufweist, die innerhalb der Abdeckung angeordnet ist und durch welche das polymere Material (S) läuft.

7. Bestrahlungsvorrichtung nach Patentanspruch 6, dadurch gekennzeichnet, daß die Abdeckung aus einem Zylinder mit doppelten Wänden (6, 8) besteht, wobei zwischen den Wänden ein Kühlmedium zirkuliert.

8. Bestrahlungsvorrichtung nach Patentanspruch 6 oder 7, dadurch gekennzeichnet, daß die Quartzröhre (9) mit einem durch sie hindurchlaufenden Transportband (4) versehen ist, welches das als Profil (S) geformte polymere Material trägt.

9. Bestrahlungsvorrichtung nach Patentanspruch 8, dadurch gekennzeichnet, daß die Geschwindigkeit (V₁) des Transportbandes (4) veränderbar ist.

10. Bestrahlungsvorrichtung nach einem der Patentansprüche 6 bis 9, dadurch gekennzeichnet, daß die Quartzröhre (9) mit Anschlüssen (14, 15) zum Einlaß und/oder Auslaß von Luft oder Stickstoff versehen ist.

11. Bestrahlungsvorrichtung nach einem der Patentansprüche 6 bis 10, dadurch gekennzeichnet, daß die UV-Lampe (11) mit einem Lampenhalter (10) verbunden ist, der innerhalb der Abdeckung (6) sowohl radial als auch axial bewegbar ist.

## Revendications

1. Procédé de préparation d'un polyéthylène réticulé (plastiques éthyléniques thermodurcissables) par irradiation aux rayons ultraviolets d'un composé moulé contenant un polyéthylène mélangé à un agent de réticulation et un photoinitiateur, caractérisé en ce le photoinitiateur consiste en une substance chimique répondant à la formule I : 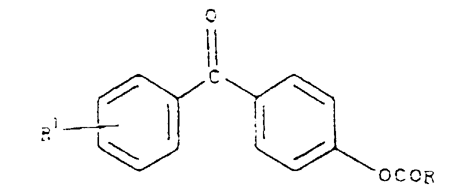 dans laquelle R représente un groupement hydrocarboné ayant de 10 à 50 atomes de carbone, de préférence de 10 à 25 atomes de carbone, et R¹ représente l'hydrogène ou un halogène, tel que le chlore, de préférence en position 4, et en ce que le polymère est extrudé en une forme appropriée, procédé au cours duquel le polymère fondu non solidifié mais encore chaud est réticulé par irradiation ultraviolette, directement après extrusion ("en ligne"), pour obtenir une forte teneur en, gel supérieure à 50 %.

2. Procédé selon la revendication 1, caractérisé en ce que la réaction de réticulation est effectuée à une température située à l'intérieur de l'intervalle des températures de fusion dudit polymère et sous atmosphère d'azote.

3. Procédé selon la revendication 1 ou 2, caractérisé en ce que la réaction de réticulation est effectuée en présence d'un autre matériau de mélange consistant en au moins un agent de photostabilisation et/ou au moins un antioxydant.

4. Procédé selon l'une quelconque des revendications 1 à 3, caractérisé en ce que la réaction de réticulation est effectuée dans le polymère fondu comprenant un fil métallique auto-porteur.

5. Procédé selon la revendication 1, caractérisé en ce que le photoinitiateur est un substance répondant à la formule I dans laquelle COR représente un groupe lauroyle ou stéaroyle.

6. Unité d'irradiation pour préparer des matériaux polymères réticulés par irradiation aux rayons ultraviolets d'un composé moulé contenant des matériaux polymères en mélange avec un agent de réticulation et un agent photoinitiateur, caractérisée en ce que, afin de mettre en oeuvre un procédé en continu, le photoinitiateur consiste en une substance chimique répondant à la formule I : 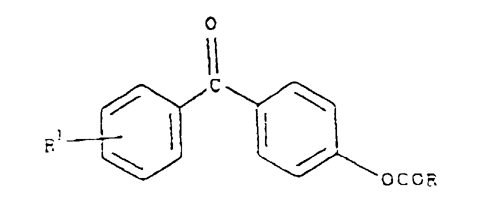 dans laquelle R représente un groupement hydrocarboné ayant de 10 à 50 atomes de carbone, de préférence de 10 à 25 atomes de carbone, et R¹ représente l'hydrogène ou un halogène, tel que le chlore, de préférence en position 4, et en ce que l'unité comprend une enveloppe (6) et, à l'intérieur de l'enveloppe, un réflecteur (7), et au moins une lampe à UV (11) et, pour maintenir une éventuelle atmosphère durant la réaction de réticulation, un tube en quartz (9) logé à l'intérieur de l'enveloppe, tube à travers lequel le matériau polymère (S) passe.

7. Unité d'irradiation selon la revendication 6, caractérisée en ce que l'enveloppe consiste en un cylindre à deux parois (6,8) entre lesquelles un milieu de refroidissement circule.

8. Unité d'irradiation selon la revendication 6 ou 7, caractérisée en ce qu'à l'intérieur du tube en quartz (9), une bande transporteuse (4) le traversant est prévue et déplace le matériau polymère obtenu sous forme du profilé S.

9. Unité d'irradiation selon la revendication 8, caractérisée en ce que la vitesse (V₁) de la bande transporteuse (4) est variable.

10. Unité d'irradiation selon l'une quelconque des revendications 6 à 9, caractérisée en ce que le tube en quartz (9) est muni de raccords (14,15) pour l'entrée et/ou la sortie d'air ou d'azote,

11. Unité d'irradiation selon l'une quelconque des revendication 6 à 10, caractérisée en ce que la lampe à UV (11) est reliée à un support (10) de lampe, mobile à l'intérieur de l'enveloppe (6) à la fois radialement et axialement.
